# EUROPÄISCHE PATENTSCHRIFT

(11) **EP 1 960 445 B1**
(45) Veröffentlichungstag und Bekanntmachung des Hinweises auf die Patenterteilung: **12.03.2014**
(21) Anmeldenummer: 06830434.4
(22) Anmeldetag: 07.12.2006
(51) Int. Cl.: C08G 12/42

(54) **VERETHERTE MELAMIN-FORMALDEHYDKONDENSATE MIT HOHEM FESTSTOFFGEHALT UND GERINGER VISKOSITÄT**
ETHERIFIED MELAMINE-FORMALDEHYDE CONDENSATES WITH A HIGH SOLIDS CONTENT AND LOW VISCOSITY
CONDENSAT MELAMINE-FORMALDEHYDE ETHERIFIE PRESENTANT UNE TENEUR ELEVEE EN SOLIDES ET UNE FAIBLE VISCOSITE

(30) Priorität: 09.12.2005 DE 102005058855
(43) Veröffentlichungstag der Anmeldung: 27.08.2008
(73) Patentinhaber: BASF SE, 67056 Ludwigshafen (DE)
(72) Erfinder: EICHFELDER, Andreas, 67133 Maxdorf (DE); EHRHARDT, Rainer, 68199 Mannheim (DE); REIF, Martin, 67354 Römerberg (DE); RÜBA, Eva, 68161 Mannheim (DE); SCHERR, Günter, 67065 Ludwigshafen (DE); SCHNEIDER, Jörg, B-1970 Wezembeek-oppern (BE); WEILACHER, Dieter, 67454 Hassloch (DE)
(86) Internationale Anmeldenummer: PCT/EP2006/069409
(87) Internationale Veröffentlichungsnummer: WO 2007/065922

(56) Entgegenhaltungen:
- EP-A1- 0 008 683
- WO-A-01/60882
- WO-A-2005/068441
- GB-A- 1 030 268
- US-A- 2 998 411
- US-A- 4 101 520

## Beschreibung

Die Erfindung betrifft ein Verfahren zur Herstellung veretherter Melamin-Formaldehydkondensate, die veretherten Melamin-Formaldehydkondensate und deren Verwendung. Insbesondere betrifft sie ein geeignetes Verfahren, das Einfluss auf den Anteil an Einkern-Komponenten mit einem Substitutionsgrad < 6 in den veretherten Melamin-Formaldehydkondensaten nimmt, wodurch sich deren Strukturen, Reaktivitäten und Viskositäten beeinflussen lassen. Hierbei wird mit einer Einkern-Komponente ein Melamin-Molekülbaustein und mit Substitutionsgrad die Anzahl der durch Umsetzung mit Formaldehyd ausgetauschten Wasserstoffe der Amingruppen des Melamin-Molekülbausteins (Melaminrings) bezeichnet.

Veretherte Melamin-Formaldehydkondensate sind bekannt und beispielsweise im Houben-Weyl, Methoden der organischen Chemie, Band XIV-2, 1963, Seiten 319 bis 402 sowie in Ullmann's Encyclopädie der Technischen Chemie, 1953, Band 3, Seiten 487 bis 489 beschrieben; als synonymer Begriff wird auch Melaminharz, Melaminharzkondensate oder Melamin-Formaldehydharzkondensate verwendet.

Der industrielle Bedarf an veretherten Melamin-Formaldehydkondensaten ist stark angestiegen. Häufig werden veretherte Melamin-Formaldehydkondensate als Aminoplastvernetzer in Lackkombinationen, als Vernetzer für hydroxylgruppenhaltige Latices und Dispersionsbinder, zur Herstellung von Pressmatten, als Bestandteil wasserfester Klebstoffe für Furnierleimung, bei der Herstellung von Schichtstoffen, Umleimern und bei der Oberflächenformung von Plattenmaterial verwendet. Ebenso finden veretherte Melamin-Formaldehydkondensate Einsatz- in der Papierindustrie zur Imprägnierung und Beschichtung von Papier.

Für die mannigfaltigen Anwendungen in den vorher genannten Bereichen sind Oberflächenhärte, Kratzfestigkeit, Trockenhitzebeständigkeit, Resistenz gegen Wasserdampf, Haftfestigkeit und Elastizität der durch einen durch Säure- und/oder Hitzeeinwirkung bewirkten Härtungsprozess entstandene und ausgehärtete Melaminharze erwünscht.

Die Herstellung veretherter Melamin-Formaldehydkondensate ist z.B. nach DE-A 25 16 349 und US-A 4,425,466 bekannt, wobei Melamin mit Formaldehyd und Alkoholen in Gegenwart von starken organischen Säuren bei 80 bis 130 °C umgesetzt wird.

Darüber hinaus ist aus dem Stand der Technik eine Reihe von Herstellungsverfahren für Melamin-Förmaldehydharzkondensate bekannt, denen unterschiedliche Anforderungen zugrunde lagen. So beschreibt DE-A 102 61 804 ein Direktsyntheseverfahren zur Herstellung von Melamin-Harzkondensaten mit einer mittleren Molmasse von 500 bis 50.000, welche frei von an den Triazinringen gebundenen Hydroxymethylenaminogruppen und die Triazinringe verknüpfenden -NH-CH₂-O-CH₂-NH-Gruppen sind.

Andere Schriften, beispielsweise DE-A 100 07 951 und EP-A 0 385 225, beziehen sich auf Lagerstabilitäten der Melamin-Formaldehydkondensate oder deren Leitfähigkeit sowie deren Eignung zur Beschichtung von Holzwerkstoffen.

DE-A 32 16 927 beschreibt eine Lösung von Melaminharzen, die zu mindestens 80 Gew.-% aus Melamin und Formaldehyd im Molverhältnis 1 : 1,5 bis 1 : 4 aufgebaut sind und die 1 bis 20 Gew.-%, bezogen auf den Feststoffgehalt des Melaminharzes eines Alkalidisulfits, enthalten. Hierbei wird in Beispiel 1 empfohlen, die bei der Kondensation des Melamins und des Formaldehyds zu den Melaminharzen in wässriger Lösung auftretenden Viskositäten zu überwachen. Die so erzeugten Melaminharze, welche für die Herstellung von Fäden und Fasern empfohlen sind, weisen eine Viskosität von mehr als 10.000 mPas auf.

WO 01/60882 A beschreibt eine Zusammensetzung eines Alkoxylmethylmelamin-Vernetzers, enthaltend monomere C₁- bis C₈-Alkoxymethylmelamin-Derivate, 5% bis 50% oligomere C₁- bis C₈-Alkoxymethylmelamin-Derivate. Diese Zusammensetzung ist bei Raumtemperatur flüssig. Die Herstellung der Alkoxymethylmelamin-Derivate erfolgt durch Methylolierung von Melamin mit Formaldehyd unter basischer Bedingung pH ≥ 8, wobei ein Methylierungszwischenprodukt in fester Form anfällt, Veretherung des Methylolmelamins mit Methanol unter saurer Bedingung pH ≤ 5, T= 25 °C bis 70 °C, Erhöhung des Alkylierungsgrads durch eine mehrstufige Veretherung und Zusatz von Methanol im Überschuss 10:1 bei einem pH < 5.

GB 1 030 268 offenbart ein Verfahren zur Herstellung von flüssigen, beständigen Mischungen von methylverethertem Hexamethylolmelamin durch Methylierung von Hexamethylolmelamin mit einem mittleren Methylierungsgrad von 4,85 bis 5,15. Des Weiteren wird ein Herstellungsverfahren offenbart, bei dem neben einer Methylolierungsstufe zwei Veretherungsstufen angegeben sind. Es findet sich kein Hinweis auf eine weitere Methylolierungsstufe.

WO 2005/068441 A1 beschreibt ein Verfahren zur Herstellung von mehrfach methyloliertem Melamin und von mehrfach mit Alkanol verethertem mehrfach methylolierten Melaminverbindungen, wobei die Methylolierungsreaktion in einem Knetreaktor durchgeführt wird. Das methylolierte Melamin wird anschließend aus dem Knetreaktor kontinuierlich ausgetragen und in einem weiteren Reaktor mit einem im Überschuss vorliegendem Alkanol umgesetzt, wobei die Veretherung über mehrere Stufen mit zwischenzeitlicher Destillation zu einem teil- oder vollveretherten mehrfach methylolierten Melamin führt.

Aufgabe der vorliegenden Erfindung ist es, ein Verfahren zur Erzeugung von veretherten Melamin-Formaldehydkondensaten bereitzustellen, die sich insbesondere durch einen hohen Feststoffgehalt und eine geringe Viskosität auszeichnen.

Die Aufgabe wird durch ein Verfahren zur Herstellung von veretherten Melamin-Formaldehydkondensaten gelöst, bei dem
(a) in einem ersten Reaktionsschritt bei 40 bis 100 °C eine Methylolierung von Melamin mit Formaldehyd im Molverhältnis 1 : 6 bis 1 : 15 bei einem pH-Wert von > 7 durchgeführt wird, wobei das Formaldehyd in Form einer 30-bis 85 gew.-%igen wässrigen Lösung eingesetzt wird;
(b) in einem zweiten Reaktionsschritt eine Veretherung des aus Schritt (a) resultierenden Hydroxymethylierungs-Zwischenproduktes bei 40 bis 120 °C in Gegenwart eines C₁-C₄-Alkohols bei einem pH-Wert < 4,5 durchgeführt wird;
(c) in einem dritten Reaktionsschritt das Reaktionsgemisch aus Schritt (b) durch Zugabe einer anorganischen Base auf einen pH-Wert > 10 eingestellt, wodurch weitere Hydroxymethylierungen stattfinden, und anschließend flüchtige Bestandteile durch mindestens einen Destillationsschritt entfernt werden, wonach der pH-Wert weiterhin > 10 betragen muss;
(d) die Reaktionsschritte (b) und (c) mindestens einmal wiederholt werden, wobei sich durch den vorhandenen Überschuss an Formaldehyd weitere Hydroxymethylierungsschritte ergeben.

Mit dem im Überschuss eingesetzten Formaldehyd in dem erfindungsgemäßen Verfahren zur Herstellung von Melamin-Formaldehydkondensaten ist eine Hydroxymethylierung in allen Reaktionsschritten möglich. Die erfindungsgemäß hergestellten Melamin-Formaldehydkondensate weisen einen hohen Hydroxymethylierungs- und Veretherungsgrad auf. Darüber hinaus besteht ein Zusammenhang zwischen Veretherungsgrad und Viskosität. Melamin-Formaldehydkondensate mit einem kleinen Anteil an Einkern-Komponenten mit einem Substitutionsgrad nahe 6 weisen einen geringen Anteil an unsubstituierten Amino-Gruppen auf und zeigen günstige viskose Eigenschaften.

Bevorzugt wird Melamin in dem erfindungsgemäßen Verfahren als Feststoff eingesetzt. Formaldehyd wird in Form einer 30 bis 85 gew.-%igen, bevorzugt 40 bis 60 gew.-%igen wässrigen Lösung eingesetzt. Hierbei werden vorteilhafterweise pro Mol Melamin 6 bis 15 Mol, vorzugsweise 7 bis 10 Mol Formaldehyd eingesetzt.

Die Methylolierung des Melamins erfolgt zweckmäßig bei Temperaturen von 40 bis 100 °C, vorzugsweise 60 bis 85 °C. Die Methylolierung des Melamins kann bei deren Vermischung mit der Formaldehydkomponente einsetzen. Die Methylolierung wird bei einem pH-Wert > 7, bevorzugt bei einem pH-Wert von 8 bis 10 durchgeführt. Die Einstellung des pH-Wertes kann mit einer anorganischen Base, beispielsweise Natronlauge, Kalilauge oder Amine, beispielsweise Monoethanolamin, Triethylenamin, erfolgen. Gegebenenfalls wird der Ansatz zum Beispiel mit Borax gepuffert. Die Methylolierung findet üblicherweise bei Normaldruck statt, wobei sie auch unter Druck, im Allgemeinen bei einem Druck von 0,5 bis 10 bar, durchgeführt werden kann.

In dem sich anschließenden zweiten Reaktionsschritt, d.h. der ersten Veretherungsstufe, wird das aus der Methylolierungsstufe erhaltene Hydroxymethylierungs-Zwischenprodukt bei einem pH-Wert < 4,5 in Gegenwart eines C₁-C₄-Alkohols verethert. Bevorzugt wird Methanol als Alkohol für die Veretherung verwendet. Hierbei kann z.B. das Hydroxymethylierungs-Zwischenprodukt in saures Methanol - d.h. einem Methanol/Wasser-Gemisch mit einem sauren pH-Wert - mit einem bevorzugten Methanolüberschuss im Verhältnis Melamin:Methanol 1:7 bis 1:50, bevorzugt 1:7 bis 1:25 pro Veretherungsschritt gegeben werden. Alternativ kann das Hydroxymethylierungs-Zwischenprodukt in Methanol gegeben werden, und der pH-Wert wird erst durch Zugabe einer geeigneten Säure, beispielsweise HNO₃, H₂SO₄, HCl oder Methansulfonsäure, auf einen pH-Wert im Bereich von 2,5 bis 3,5 eingestellt.

Die Veretherung findet dabei bei Temperaturen zwischen 40 und 120 °C, bevorzugt 50 bis 80°C und herrschenden Drücken zwischen 0,5 und 10 bar, bevorzugt zwischen 1 und 3 bar statt. Die Reaktionszeit kann zwischen 10 und 120 Minuten variiert werden, vorzugsweise beträgt sie 20 bis 60 Minuten.

Das nach der ersten Veretherungsstufe vorliegende Reaktionsgemisch wird anschließend durch Zugabe einer geeigneten anorganischen Base, beispielsweise wässrige NaOH- oder KOH-Lösung alkalisch gestellt, wodurch weitere Hydroxymethylierungen stattfinden. Es wird ein pH-Wert > 10 eingestellt, bevorzugt liegt er in einem Bereich von > 10 bis 11.

Das nach der Veretherung vorliegende Reaktionsgemisch, bevorzugt eine methanolische Melamin-Formaldehydkondensatlösung, wird anschließend mindestens einem Destillationsschritt unterworfen. Hierbei werden flüchtige Bestandteile, insbesondere überschüssiges Methanol, entfernt. Vorzugsweise kann dieser Destillationsschritt als Vakuumdestillation durchgeführt werden, wobei Drücke von 1000 bis 0,1 mbar, vorzugsweise von 1000 bis 10 mbar und Temperaturen von 30 bis 70 °C herrschen.

Es kann sich ein weiterer Destillationsschritt anschließen, wobei ein Teil des Wassers und des überschüssigen Formaldehyds entfernt werden können.

Um nun eine möglichst vollständige Umsetzung des Melamins bis hin zum Hexahydroxymethylmelamins zu erreichen, ist aus dem Stand der Technik bekannt, weitere Methylolierungs- und Veretherungsschritte bei entsprechender Einstellung eines alkalischen pH-Wertes und Zugabe von 0,01 - 3 Mol, bevorzugt 0,01 - 1 Mol Formaldehyd pro Mol Melamin, über eine Zeit von 10 bis 120 min, bevorzugt 10 bis 60 min, Temperaturen von 30 bis 100 °C, bevorzugt 30 bis 70 °C und Drücken von 0,5 bis 10 bar, bevorzugt 1 bis 3 bar durchzuführen. Hierbei können für die weiteren Veretherungsschritte gleiche oder unterschiedliche Alkohole verwendet werden, wodurch mischveretherte Produkte gebildet werden. Es können Aufkonzentrierungsschritte durch Destillationsschritte folgen. Mit steigendem Hydroxymethylierungsgrad des Melamins erweist sich das System allerdings als schwerer handhabbar. Insbesondere wird eine Fahrweise in einem Kessel zunehmend durch steigende Zähigkeit des Reaktionsgemisches erschwert, bis sie nicht mehr durchführbar ist. Der als Feststoff vorliegende Anteil an Hexahydroxymethylmelamin, welcher erfindungsgemäß möglichst hoch sein soll, lässt sich nur schwer von einem Rührer durchmischen.

Die Reaktionen werden bevorzugt in einem Rührkessel durchgeführt, wobei durch eine geeignete Wahl des eingesetzten Rührers und des Energieeintrags eine ausreichende Vermischung in dem System erreicht werden kann.

In einer erfindungsgemäßen Ausführungsform ergeben sich durch den vorhandenen Überschuss an Formaldehyd bevorzugt an die erste Veretherungsstufe weitere Hydroxymethylierungsschritte.

Hierbei hat sich gezeigt, dass das in dem Hydroxymethylierungs-Zwischenprodukt vorhandene Methanol die Reaktivität des Formaldehyds aufgrund einer stattfindenden Halbacetalbildung stark reduziert. Somit gestaltet sich die Hydroxymethylierung im Hinblick auf einen hohen Substitutionsgrad besonders effektiv, wenn das überschüssige Methanol durch einen geeigneten Destillationsschritt vorher aus der Lösung entfernt wird. Darüber hinaus findet die Hydroxymethylierung insbesondere in einem alkalischen pH-Bereich statt. Es hat sich allerdings gezeigt, dass wahrscheinlich aufgrund einer Cannizzaro-Reaktion, d.h. der Disproportionierung von Formaldehyd in Methanol und Ameisensäure, der pH-Wert während einer Destillationsstufe zur Entfernung des Methanols sinkt. Neben dem Effekt auf den pH-Wert der Lösung reduziert sich ebenfalls der zur Verfügung stehende Anteil des Formaldehyds.

Für das erfindungsgemäße Verfahren ist es demnach von Bedeutung, dass nach der Entfernung des Methanols durch einen Destillationsschritt der pH-Wert des Reaktionsgemisches > 10 beträgt. Dies kann erreicht werden, indem vor der Methanoldestillation so viel Base zugegeben wird, dass ein entsprechender pH-Wert aufrechterhalten werden kann. Alternativ kann eine zusätzliche Zudosierung von Base während und/oder nach der Methanoldestillation vorgesehen werden.

Darüber hinaus hat sich gezeigt, dass ein schneller Destillationsprozess besonders geeignet ist, um den pH-Wert während der Methanoldestillation in dem gewünschten alkalischen Bereich zu halten.

Als besonders günstig wird die Destillation in Fallfilmverdampfern, Dünnschichtverdampfern, z. B. SAMBAY-Dünnschichtverdampfern, durchgeführt. Dieser letztere Verdampfungstyp mit mechanisch erzeugten Flüssigkeitsschichten beziehungsweise Flüssigkeitsfilmen ist für temperaturempfindliche Lösungen und im Allgemeinen zur Destillation hoch viskoser, schwersiedender Lösungen besonders geeignet. Die zu verdampfende Flüssigkeit wird über bewegliche Wischer oder starre Rührblätter eines Rotors als dünne Schicht über eine vorzugsweise zylindrische Wärmeaustauschfläche verteilt, so dass dadurch eine zunehmende Viskosität der zu verdampfenden Lösung keine Probleme in der Prozessführung hervorruft.

Darüber hinaus erweist sich eine hohe Basendosierung vor der Methanoldestillation als vorteilhaft, um nach dem Destillationsschritt einen pH-Wert > 10, bevorzugt > 11 aufrecht zu erhalten.

Falls erforderlich kann ebenfalls eine zweite Basendosierung nach der Methanoldestillation vorgenommen werden.

In dem erfindungsgemäßen Verfahren folgen nach einer ersten Methylolierungs- und Veretherungsstufe mit anschließender Methanoldestillation weitere Reaktionsschritte zur Methylolierung und Veretherung, in denen das vorliegende Reaktionsgemisch, die methanolischen Melamin-Formaldehydkondensatlösungen, mit Methanol in einem sauren pH-Bereich, bevorzugt zwischen 2,5 und 3,5, einer Reaktionstemperatur von 40 bis 120 °C, bevorzugt 40 bis 70°C während einer Zeitdauer von 10 bis 60 min, bevorzugt 10 bis 30 min kondensiert werden. Vor, während oder nach der sich anschließenden Methanoldestillation wird das System alkalisch gestellt. Die Destillation erfolgt bei Temperaturen von 30 bis 120°C, bevorzugt von 40 bis 70 °C und Drücken von 1000 bis 0,01 mbar, bevorzugt von 1000 bis 10 mbar.

Um einen möglichst hohen Hydroxymethylierungsgrad des veretherten Melamin-Formaldehydkondensats zu erreichen, hat sich ein mehrstufiges Verfahren als vorteilhaft erwiesen. Insbesondere die Entfernung von überschüssigem Methanol aus dem System und Aufrechterhaltung eines alkalischen pH-Wertes erhöht die Effektivität der jeweiligen Hydroxymethylierungsschritte. Diese mehrstufige Verfahrensführung vermeidet die Probleme der Handhabung des Reaktionsgemisches, die aus dem zunehmenden Feststoffanteil mit fortschreitendem Hydroxymethylierungsgrad erwachsen.

Die erfindungsgemäße Nutzung weiterer Hydroxymethylierungsschritte mit einer sich jeweils anschließenden Methanoldestillation und einer gezielten Steuerung des pH-Wertes vor, während und nach der Methanoldestillation erlaubt es, einen hohen Hydroxymethylierungsgrad in einem veretherten Melamin-Formaldehydkondensat zu erreichen.

Erfindungsgemäß wird ebenso der Effekt ausgenutzt, den der Substitutionsgrad auf die Viskosität des zu erzielenden Endproduktes hat. Mit zunehmendem Hydroxymethylierungsgrad sinkt die Viskosität des Endproduktes, wodurch sich anschließende Verarbeitungsschritte und Verwendungsmöglichkeiten des erfindungsgemäßen veretherten Melamin-Formaldehydkondensats, beispielsweise als säurehärtender Vernetzer für hydroxygruppenhaltige Bindemittelsysteme für Klarlacke, Buntlacke, Holzbeschichtung, Papierverfestigung oder Coil-Coating, vereinfachen und erweitern.

Die vorliegende Erfindung wird nun anhand eines Ausführungsbeispiels näher erläutert. Falls nicht ausdrücklich etwas anderes angegeben ist, sind alle Angaben über Teile und Prozentansätze Gewichtsangaben. Nach jeder Veretherungsstufe ist der Substitutionsgrad und die Veretherung anhand ausgewählter Peaks in der HPLC analysiert sowie der Feststoffgehalt und die Viskosität gemessen worden.

Die Nomenklatur der Derivate X/Y/Z ist wie folgt:
X entspricht Mol Melamin
Y entspricht Mol Formaldehyd
Z entspricht Mol Methanol.

Beispielsweise bedeutet die Angabe 1/7/6, dass pro Mol Melamin 7 Mol Formaldehyd und 6 Mol Methanol eingebaut sind. Dies deutet darauf hin, dass an eine bestehende Hydroxymethylgruppe ein weiteres Formaldehyd angreift, wodurch eine kleine Polyoxymethylkette gebildet wird.

### Beispiel 1

In einem Reaktionsgefäß wird 375 g einer 40%igen wässrigen Formaldehydlösung vorgelegt, mit NaOH in Form einer 25%igen wässrigen Lösung auf einen pH-Wert von 9 eingestellt. Nach Zugabe von 70 g Melamin wird das Reaktionsgemisch auf 70 °C erhitzt und ab 50°C 40 Minuten gerührt. Das erhaltene Hydroxymethylierungs-Zwischenprodukt wird anschließend mit 167 g Methanol verdünnt, mit 3,2 ml 30%iger wässrigen HNO₃-Lösung auf einen pH-Wert von 3 eingestellt und bei 60 °C für 30 Minuten verethert. Durch Zugabe von 2,8 ml einer 25%igen Natronlauge wird ein pH-Wert > 10 eingestellt und die Veretherungsreaktion beendet. Überschüssiges Methanol wird im Vakuum bei einem Druck von 80 mbar und einer Temperatur von 90 °C abdestilliert.

Der Feststoffgehalt, welcher durch Trocknung im Trockenschrank bei 120 °C für zwei Stunden bestimmt wird, beträgt 78,1 %, der Wassergehalt 3 %, die Viskosität bestimmt sich zu 75.000 mPas.

Die HPLC-Analyse ergibt folgende Derivate, wobei der Rest dimer und höhermolekular ist und nicht als einzelne Spezies zugeordnet werden kann:

| 1/4/4 | 1/5/4 | 1/6/4 | 1/5/5 | 1/6/5 | 1/6/6 | 1/7/6 | 2/X/X | (Mol/Mol/Mol) |
|---|---|---|---|---|---|---|---|---|
| 1,7 | 7,4 | 11,9 | 3,9 | 11,5 | 6,4 | 1,8 | 7,1 | (Flächen-%) |

Es zeigt sich, dass die Substitution noch nicht sehr vollständig ist und nur 50 % der Produkte erfasst werden, während der Rest nicht zugeordnet werden kann.

Das erhaltene veretherte Melamin-Formaldehydkondensat wird anschließend mit 267 g Methanol verdünnt, der pH-Wert mit 1,8 ml 30%iger wässriger HNO₃-Lösung auf 3 eingestellt und bei einer Temperatur von 60 °C für 12 Minuten kondensiert. Anschließend wird durch Zugabe von 1,5 ml 25%iger wässriger NaOH-Lösung im Reaktionsgemisch ein pH von 10,5 eingestellt und im Vakuum bei einem Druck von 120 mbar und einer Temperatur von 90 °C das überschüssige Methanol abdestilliert. Der im Trockenschrank (120 °C, t = 2 h) ermittelte Feststoffgehalt beträgt nun 95,4 %, der Wassergehalt liegt bei 0,8 %, die Viskosität bei 15.500 mPas.

Die HPLC-Analyse liefert folgende Ergebnisse:

| 1/4/4 | 1/5/4 | 1/6/4 | 1/5/5 | 1/6/5 | 1/6/6 | 1/7/6 | 2/X/X | (Mol/Mol/Mol) |
|---|---|---|---|---|---|---|---|---|
| 0,3 | 1,3 | 1,9 | 5 | 13,3 | 18,1 | 5,2 | 46,5 | (Flächen-%) |

Das Produkt wird anschließend nochmals mit 267 g Methanol verdünnt, bei einer pH-Wert-Einstellung von 3 durch 1,2 ml 30%iger wässrige HNO₃-Lösung. Die Kondensation findet bei einer Temperatur von 60 °C für 12 Minuten statt. Anschließend wird die Lösung mit 0,9 ml einer 25%igen wässrigen NaOH-Lösung alkalisch gestellt und das überschüssige Methanol im Vakuum bei einem Druck von 120 mbar und einer Temperatur von 90 °C abdestilliert.

Der Feststoffgehalt, welcher durch Trocknung im Trockenschrank bei 120 °C für 2 Stunden ermittelt wird, beträgt nun 97,8 %, der Wassergehalt 0,5 %, die Viskosität wird zu 6.400 mPas bestimmt.

Die HPLC-Anlyse zeigt folgendes Ergebnis:

| 1/4/4 | 1/5/4 | 1/6/4 | 1/5/5 | 1/6/5 | 1/6/6 | 1/7/6 | 2/X/X | (Mol/Mol/Mol) |
|---|---|---|---|---|---|---|---|---|
| 0,4 | 1,7 | 0,9 | 0,6 | 9 | 31,9 | 8 | 28,2 | (Flächen-%) |

An diesem Beispiel wird verdeutlicht, dass sich von Stufe zu Stufe die Anteile der voll veretherten Produkte (1/4/4, 1/5/5, 1/6/6) zunehmen, wobei gleichzeitig die Viskosität des Reaktionsgemisches sich von 75.000 mPas auf 6.400 mPas reduziert.

## Patentansprüche

1. Verfahren zur Herstellung von veretherten Melamin-Formaldehydkondensaten, bei dem
(a) in einem ersten Reaktionsschritt bei 40 bis 100 °C eine Methylolierung von Melamin mit Formaldehyd im Molverhältnis 1 : 6 bis 1 : 15 bei einem pH-Wert von > 7 durchgeführt wird, wobei das Formaldehyd in Form einer 30 bis 85 gew.-%igen wässrigen Lösung eingesetzt wird.
(b) in einem zweiten Reaktionsschritt eine Veretherung des aus Schritt (a) resultierenden Hydroxymethylierungs-Zwischenproduktes bei 40 bis 120 °C in Gegenwart eines C₁-C₄-Alkohols bei einem pH-Wert < 4,5 durchgeführt wird;
(c) in einem dritten Reaktionsschritt das Reaktionsgemisch aus Schritt (b) durch Zugabe einer anorganischen Base auf einen pH-Wert > 10 eingestellt, wodurch weitere Hydroxymethylierungen stattfinden, und anschließend flüchtige Bestandteile durch mindestens einen Destillationsschritt entfernt werden, wonach der pH-Wert weiterhin > 10 betragen muß;
(d) die Reaktionsschritte (b) und (c) mindestens einmal wiederholt werden, wobei sich durch den vorhandenen Überschuss an Formaldehyd weitere Hydroxymethylierungsschritte ergeben.

2. Verfahren zur Herstellung von veretherten Melamin-Formaldehydkondensaten nach Anspruch 1, **dadurch gekennzeichnet, dass** bei der Veretherung (b) Methanol als Alkohol verwendet wird.

3. Verfahren zur Herstellung von veretherten Melamin-Formaldehydkondensaten nach Anspruch 1 oder 2, **dadurch gekennzeichnet, dass** Methanol in der Stufe (c) durch einen Destillationsschritt entfernt wird.

4. Verfahren zur Herstellung von veretherten Melamin-Formaldehydkondensaten nach einem der Ansprüche 1 bis 3, **dadurch gekennzeichnet, dass** der mindestens eine Destillationsschritt des Reaktionsschrittes (c) in einem Fallfilm- oder DünnschichtVerdampfer durchgeführt wird.

## Claims

1. A process for the preparation of etherified melamine/formaldehyde condensates, in which
(a) in a first reaction step at from 40 to 100°C, a methylolation of melamine with formaldehyde in the molar ratio of from 1:6 to 1:15 is carried out at a pH of > 7, the formaldehyde being used in the form of a 30 to 85% strength by weight aqueous solution;
(b) in a second reaction step, an etherification of the hydroxymethylation intermediate resulting from step (a) is carried out at from 40 to 120°C in the presence of a C₁-C₄-alcohol at a pH of < 4.5;
(c) in a third reaction step, the reaction mixture from step (b) is adjusted to a pH of > 10 by addition of an inorganic base with the result that further hydroxymethylations take place, and then volatile constituents are removed by at least one distillation step, after which the pH must still be > 10;
(d) the reaction steps (b) and (c) are repeated at least once, resulting in further hydroxymethylation steps due to the excess of formaldehyde present.

2. The process for the preparation of etherified melamine/formaldehyde condensates as claimed in claim 1, wherein methanol is used as the alcohol in the etherification (b).

3. The process for the preparation of etherified melamine/formaldehyde condensates as claimed in claim 1 or 2, wherein methanol is removed in stage (c) by a distillation step.

4. The process for the preparation of etherified melamine/formaldehyde condensates as claimed in any of claims 1 to 3, wherein the at least one distillation step of reaction step (c) is carried out in a falling-film or thin-film evaporator.

## Revendications

1. Procédé pour la préparation de produits de condensation éthérifiés de mélamine-formaldéhyde, dans lequel
(a) dans une première étape de réaction, à 40 jusqu'à 100°C, on réalise une méthylolisation de mélamine avec du formaldéhyde dans un rapport molaire de 1:6 à 1:15 à un pH > 7, le formaldéhyde étant utilisé sous forme d'une solution aqueuse de 30 à 85% en poids ;
(b) dans une deuxième étape de réaction, on réalise une éthérification du produit intermédiaire d'hydroxyméthylation résultant de l'étape (a) à 40 jusqu'à 120°C en présence d'un C₁-C₄-alcool à un pH < 4,5 ;
(c) dans une troisième étape de réaction, on règle le mélange réactionnel de l'étape (b) par addition d'une base inorganique à un pH > 10, suite à quoi d'autres hydroxyméthylations ont lieu, puis on élimine les constituants volatils par au moins une étape de distillation, après quoi le pH doit en outre être > 10 ;
(d) on répète au moins une fois les étapes de réaction (b) et (c), d'autres étapes d'hydroxyméthylation ayant lieu par l'excès de formaldéhyde.

2. Procédé pour la préparation de produits de condensation éthérifiés de mélamine-formaldéhyde selon la revendication 1, **caractérisé en ce que** du méthanol est utilisé comme alcool lors de l'éthérification (b).

3. Procédé pour la préparation de produits de condensation éthérifiés de mélamine-formaldéhyde selon la revendication 1 ou 2, **caractérisé en ce que** dans l'étape (c) du méthanol est éliminé par une étape de distillation.

4. Procédé pour la préparation de produits de condensation éthérifiés de mélamine-formaldéhyde selon l'une quelconque des revendications 1 à 3, **caractérisé en ce que** ladite au moins une étape de distillation de l'étape de réaction (c) est réalisée dans un évaporateur à film tombant ou à couche mince.
